# EUROPÄISCHE PATENTSCHRIFT

(11) **EP 0 977 950 B1**
(45) Veröffentlichungstag und Bekanntmachung des Hinweises auf die Patenterteilung: **16.08.2001**
(21) Anmeldenummer: 98922743.4
(22) Anmeldetag: 18.04.1998
(51) Int. Cl.: F15B 21/04, B60T 17/22, B01D 61/36, B01D 19/00

(54) **VERFAHREN ZUM ENTWÄSSERN UND ENTGASEN VON HYDRAULIKFLÜSSIGKEITEN, VORRICHTUNG ZUR DURCHFÜHRUNG DES VERFAHRENS UND VERWENDUNG DER VORRICHTUNG**
METHOD FOR DEHYDRATING AND DEGASSING HYDRAULIC FLUIDS, DEVICE FOR CARRYING OUT SAID METHOD AND USE OF SAID DEVICE
PROCEDE DE DESHYDRATATION ET DE DEGAZAGE DE LIQUIDES HYDRAULIQUES, DISPOSITIF DE MISE EN OEUVRE DUDIT PROCEDE ET UTILISATION DUDIT DISPOSITIF

(30) Priorität: 23.04.1997 DE 19717043
(43) Veröffentlichungstag der Anmeldung: 09.02.2000
(73) Patentinhaber: DaimlerChrysler AG, 70567 Stuttgart (DE)
(72) Erfinder: MAYER, Christian, D-71254 Ditzingen (DE); JEHLE, Walter, D-88263 Horgenzell (DE); BEITLER, Hubert, D-70806 Kornwestheim (DE)
(86) Internationale Anmeldenummer: EP9802304
(87) Internationale Veröffentlichungsnummer: WO9848175

(56) Entgegenhaltungen:
- DE-A- 3 935 756
- DE-A- 4 201 565
- US-A- 4 729 773
- US-A- 5 326 386
- PATENT ABSTRACTS OF JAPAN vol. 016, no. 473 (C-0991), 2. Oktober 1992 & JP 04 171006 A (TOYOTA MOTOR CORP), 18. Juni 1992 -& DATABASE WPI Section Ch, Week 9231 Derwent Publications Ltd., London, GB; Class J01, AN 92-254284 XP002075287 -& CHEMICAL ABSTRACTS, vol. 117, no. 18, 2. November 1992 Columbus, Ohio, US; abstract no. 173920, XP002075282
- PATENT ABSTRACTS OF JAPAN vol. 018, no. 015 (C-1151), 12. Januar 1994 -& JP 05 253449 A (KURIINTETSUKU KOGYO:KK), 5. Oktober 1993 -& DATABASE WPI Section Ch, Week 9344 Derwent Publications Ltd., London, GB; Class J01, AN 93-347696 XP002075288 -& CHEMICAL ABSTRACTS, vol. 120, no. 8, 21. Februar 1994 Columbus, Ohio, US; abstract no. 80068, XP002075283
- PATENT ABSTRACTS OF JAPAN vol. 012, no. 057 (M-670), 20. Februar 1988 -& JP 62 203864 A (MAZDA MOTOR CORP), 8. September 1987
- PATENT ABSTRACTS OF JAPAN vol. 095, no. 006, 31. Juli 1995 & JP 07 068134 A (UBE IND LTD;OTHERS: 01), 14. März 1995 -& DATABASE WPI Section Ch, Week 9519 Derwent Publications Ltd., London, GB; Class A88, AN 95-144001 XP002075289 -& CHEMICAL ABSTRACTS, vol. 123, no. 6, 7. August 1995 Columbus, Ohio, US; abstract no. 60437, XP002075284
- PATENT ABSTRACTS OF JAPAN vol. 098, no. 002, 30. Januar 1998 & JP 09 262406 A (DAINIPPON INK &CHEM INC), 7. Oktober 1997 -& DATABASE WPI Section Ch, Week 9750 Derwent Publications Ltd., London, GB; Class E36, AN 97-544446 XP002075290 -& CHEMICAL ABSTRACTS, vol. 127, no. 24, 15. Dezember 1997 Columbus, Ohio, US; abstract no. 333914, XP002075285
- PATENT ABSTRACTS OF JAPAN vol. 098, no. 001, 30. Januar 1998 & JP 09 239205 A (HITACHI BUILDING SYST CO LTD), 16. September 1997 -& DATABASE WPI Section Ch, Week 9747 Derwent Publications Ltd., London, GB; Class J01, AN 97-507038 XP002075291 -& CHEMICAL ABSTRACTS, vol. 127, no. 20, 17. November 1997 Columbus, Ohio, US; abstract no. 280607, XP002075286

## Beschreibung

Die Erfindung betrifft ein Verfahren zum Entwässern und Entgasen von Hydraulikflüssikeiten, eine Vorrichtung zur Durchführung des Verfahrens und die Verwendung der Vorrichtung.

In Hydrauliksystemen sowohl zum hydrostatischen als auch zum hydrodynamischen Antrieb werden Hydraulikflüssigkeiten eingesetzt. Hydrauliksysteme werden vor allem in Steuer-, Regel-, Antriebs- und Bremsvorrichtungen von Fahrzeugen, Flugzeugen und anderen Geräten eingesetzt. Bei den Hydraulikflüssigkeiten unterscheidet man:
a.) Hydraulikflüssigkeiten auf Mineralölbasis,
b.) Glykole, Glykoläther und Glycerine,
c.) Silikonöle und Ester,
d.) schwerentflammbare Flüssigkeiten.

Das Eindringen von Luft in ein Hydrauliksystem führt zu Funktionsstörungen und zum Materialverschleiß durch Kavitation, vor allem bei hydrodynamischem Antrieb.

Verschiedene Hydraulikflüssigkeiten sind hygroskopisch, dies führt zu einer Wasseraufnahme und bei starker Erwärmung der Hydraulikflüssigkeit, wie sie in Hydrauliksystemen häufig auftritt, zur Dampfbildung. Letztere bringt wiederum Funktionsstörungen und Materialverschleiß innerhalb des Hydrauliksystems mit sich.

Um diesen Problemen vorzubeugen, wird entweder die Hydraulikflüssigkeit von Zeit zu Zeit ausgetauscht, periodisch entgast bzw. entwässert oder es wird eine Einrichtung zur kontinuierlichen Entgasung oder Entwässerung eingesetzt.

Eine derartigen Entgasungsvorrichtung ist beispielsweise aus der EP-B-0 168 656 bekannt, wobei eine Aufteilung der Leitung in einen Durchgang für Fluid mit einem Drosselventil und einen Durchgang für abgetrenntes Gas mit einem Entgasungsventil vorgesehen ist. Diese Vorrichtung weist jedoch viele bewegliche Teile auf und mit ihr ist nur eine quasikontinuierliche Entlüftung, jedoch keine Entwässerung möglich. Die aus der DE-B-29 37 957 beschriebene Vorrichtung zum Entgasen von Hydraulikflüssigkeiten basiert auf dem Prinzip der Vakuumerzeugung im Sammelbehälter und des Absaugens der in der Hydraulikflüssigkeit enthaltenen Gase, was jedoch platzaufwendig und kostenintensiv ist.

In der EP-A-0 155 115 ist eine Vorrichtung beschrieben, welche eine kontinuierliche Entlüftung von Wasser ohne bewegliche Teile ermöglicht. Diese Vorrichtung weist eine poröse PTFE-Membrane auf, die jedoch nur die Anwendung bei niedrigen Drücken von maximal 2,5 bar zuläßt und somit im wesentlichen für Wasser und andere Flüssigkeiten mit ähnlich hoher Oberflächenspannung geeignet ist. Für die Entgasung von Hydraulikflüssigkeiten ist die Vorrichtung somit nicht geeignet. Für die DE-A-37 08 950, die ebenfalls auf diesem Prinzip basiert, gilt entsprechendes, ebenso für die JP-A-4-156903, die die Nutzung einer semipermeablen Membran für das Entgasen von Wasser betrifft.

Die GB-B-1341052 betrifft ein Verfahren und eine Vorrichtung zur Rekuperation von gasförmigen Kohlenwasserstoffen bei deren Entweichen aus Kraftstofftanks, wobei die Durchlässigkeit eines Kunststoffrohres für derartige Kohlenwasserstoffe genutzt wird. Auch in der US-A-4, 897,091 wird gasförmiges Kohlendioxid aus CO₂-haltigem Methanol durch eine Membran, die das Reaktionsprodukt eines Polyamins mit einem Polyisocyanat oder Polycarbonylchlorid ist, abgeschieden.

In der DE-A-32 15 003 ist eine Dialysevorrichtung beschrieben, wobei durch einen Druckunterschied zwischen zwei durch eine hydrophobe Membran getrennten Kammern Luft aus einem Luft-Wasser-Gemisch entfernt wird.

Aus der DE-A-26 05 694 ist eine Vorrichtung zum Druckausgleich in geschlossenen Behältern bekannt, wobei eine gasdurchlässige und flüssigkeitsundurchlässige Dichtung aus mit dem Polymerisat eines fluorierten oder chlorierten Kohlenwasserstoffs imprägnierten Baumwoll-Feinstgewebe oder einem ähnlichen Stoff besteht.

Die JP 4 171 006 A beschreibt ein Verfahren und eine Vorrichtung zur Entgasung von Hydraulikflüssigkeiten innerhalb eines Hydrauliksystems wobei in der Hydraulikflüssigkeit gelöste Gase an einer für Gas durchlässigen Membran abgetrennt werden. Die dem Hydrauliksystem abgewandten Außenseite der Membran ist zur Umgebung hin geöffnet.

Die JP 62 203 864 A offenbart ein Verfahren und eine Vorrichtung zur Entwässerung von Hydraulikflüssigkeiten (Bremssystem) wobei in der Hydraulikflüssigkeit enthaltenes Wasser an einer für Wassermoleküle durchlässigen Menbran von der Hydraulikflüssigkeit abgetrennt werden. Die Membran ist in einem schlauchartigen Seitungsabschnitt des Hydrauliksystems integriert. Es wird kein Unterdruck aufrechterhalten.

Die US 4 729 773 A bescheibt eine Entgasungseinkeit für Flüssigkeiten wobei in der Flüssigkeit gelöste Gase an einer für Gas durchlässigen, porösen Membran abgetrennt werden, und wobei an der Flüssigkeitsseite der Membran ein Überdruck und an der dem Flüssigkeit abgewandten Seite der Membran ein Unterdruck aufrechterhalten wird. Die Entgasungseinheit ist nicht geiegnet in den schlauchartigen Leitungs-abschnitt eines Hydrauliksystems integriert zu werden, sondern sie ist vielmehr für Transportleitungen konzipiert.

Die Aufgabe der Erfindung besteht somit darin, ein Verfahren und eine Vorrichtung zum gleichzeitigen Entgasen und Entwässern von Hydraulikflüssigkeiten zu schaffen, das ein permanentes Entgasen und Entwässern bei geringem Platzbedarf und geringen Kosten in zuverlässiger Weise ermöglicht.

Diese Aufgabe wird erfindungsgemäß dadurch gelöst, daß in der Hydraulikflüssigkeit gelöste Gase und enthaltenes Wasser nach dem Prinzip der Pervaporation an einer für Gas und Wasser durchlässigen und für die Hydraulikflüssigkeit undurchlässigen Membran, die in einen schlauchartigen Leitungsabschnitt des Hydrauliksystems integriert ist, von der Hydraulikflüssigkeit abgetrennt werden, und wobei zum Aufrechterhalten eines Partialdruckgefälles im Bereich des Membran innerhalb des Hydrauliksystems ein Überdruck und außerhalb des Hydrauliksystems ein Unterdruck aufgebaut bzw. aufrechterhalten wird.

Eine Weiterbildung der Erfindung besteht darin, daß zum Aufrechterhalten des Partialdruckgefälles innerhalb des Hydrauliksystems ein Überdruck aufgebaut wird oder ein bestehender Überdruck genutzt wird.

Erfindungsgemäß ist vorgesehen, daß zur Entwässerung der Hydraulikflüssigkeit die Temperatur der Hydranlikflüssigkeit erhöht oder eine erhöhte Temperatur der Hydraulikflüssigkeit genutzt wird.

Im Rahmen der Erfindung liegt ebenfalls eine Vorrichtung zum Durchführen des erfindungsgemäßen Verfahrens, dadurch gekennzeichnet, daß innerhalb eines Hydrauliksystems eine für Gas und Wasser durchlässige und für Hydraulikflüssigkeit undurchlässige Membran vorgesehen ist, und wobei an der dem Hydrauliksystem abgewandten Außenseite der Membran Mittel zum Aufbauen eines Unterdrucks vorgesehen sind.

Erfindungsgemäß ist auch vorgesehen, daß die Membran zylindrisch ausgebildet ist.

Es ist vorteilhaft, daß die Membran eine Lösungs-/ Diffusionsmembran ist.

Im Rahmen der Erfindung liegt weiterhin, daß die Membran aus Polypropylen (PP), Polyethylen (PE), Polyvinyltrimethylsiloxan (PVTMS), Polytetrafluorethylen (PTFE), Polybutadien (PB), Polydimethylsiloxan (PDMS) oder Polychloropren (PCP) besteht.

Schließlich ist auch die Verwendung der Vorrichtung zur Entgasung und Entwässerung der Hydraulikflüssigkeit in Steuer-, Regel-, Antriebs- und Bremshydrauliksystemen von Kraftfahrzeugen, Schiffen und Flugzeugen erfindungsgemäß.

Die Vorteile der Erfindung liegen im wesentlichen darin, daß eine sichere und kostengünstige wenig platzintensive Möglichkeit zur Entgasung und Entwässerung von Hydraulikflüssigkeiten geschaffen wurde, die beispielsweise dann eingesetzt werden kann, wenn aus Platzgründen die Hydraulikleitungen nicht kontinuierlich ansteigend verlegt werden können, sondern ein Bogen in Kauf genommen werden muß, an dem sich Gas- und Wasserdampfblasen ansammeln könnnen, was zu einem - unbedingt zu vermeidenden - Totalausfall des Hydrauliksystems führen kann.

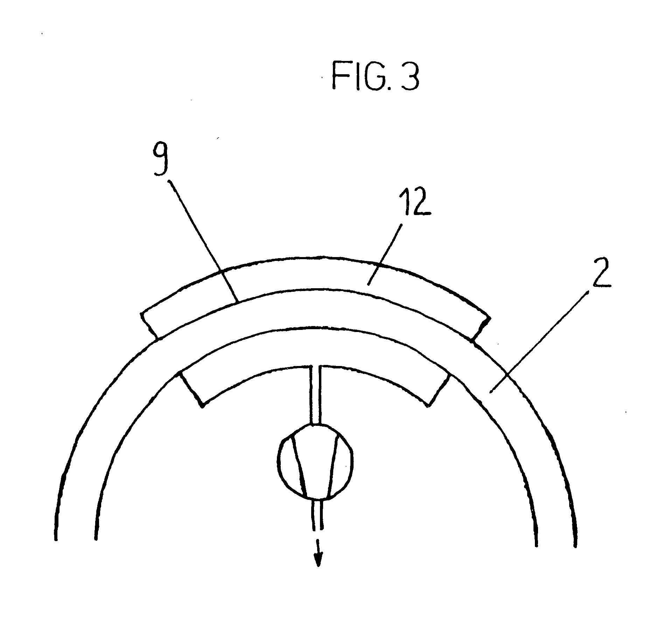

Im folgenden werden Ausbildungen der Entgasung und Entwässerung von Hydraulikflüssigkeiten anhand von Zeichnungen beschrieben. Nur Fig. 3 zeigt eine beispeilhafte Ausbildung der Erfindung. Es zeigen
- Fig. 1: ein einfaches System der hydrostatischen Kraftübertragung,
- Fig. 2: eine andere Ausführung einer hydrostatischen Kraftübertragung,
- Fig. 3: eine Ausführung mit Permeatabführung.

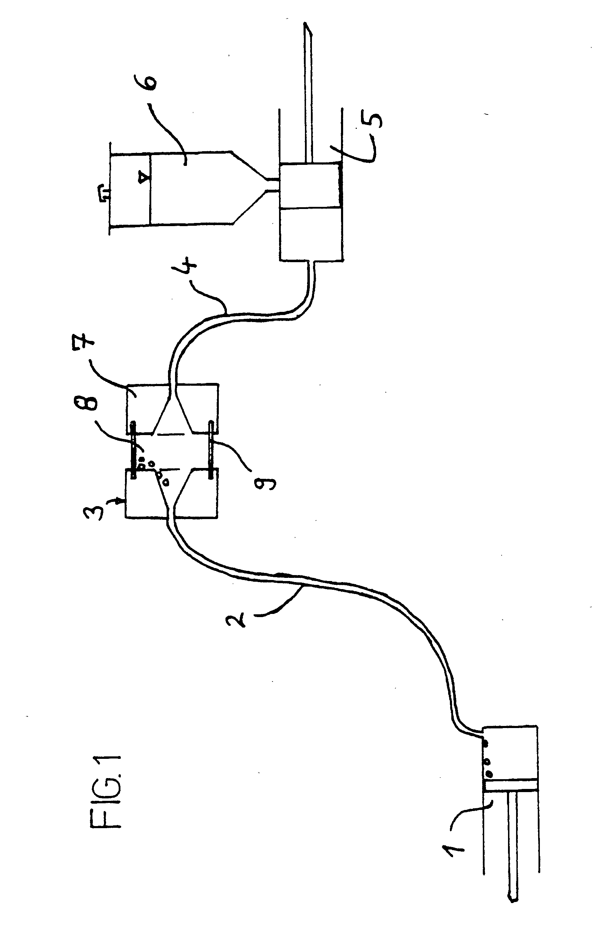

In Fig. 1 ist ein einfaches Beispiel einer hydrostatischen Kraftübertragung dargestellt, wobei angenommen wird, daß durch einen Nehmerzylinder 1 schädliche Luft in das Hydrauliksystem eindringe, welche sich an der höchsten Stelle 3 der Leitung 2 ansammelt. An dieser Stelle liegt nun erfindungsgemäß eine Membran 9, vorzugsweise eine Lösungs-/Diffusionsmembran 9 vor, über die die erforderliche Entgasung erfolgen kann. Die dargestellte Ausführung ist besonders vorteilhaft, da der Bereich 8 um die Membran 9 und diese selbst zylindrisch ausgebildet ist, so daß sich weitgehend lageunabhängig störende Luft an der Membran 9 ansammeln und durch diese hindurchtreten kann. Weiterhin ist der Leitungsabschnitt 4 zum Geberzylinder 5, der mit dem Ausgleichbehälter 6 verbunden ist, dargestellt.

Lösungs-/Diffusionsmembranen zeichnen sich dadurch aus, daß sie keine Poren aufweisen und für den Einsatz bei höheren Drücken (und teilweise auch hohen Temperaturen), wie sie in Hydraulikflüssigkeiten auftreten geeignet sind. Der Transportmechanismus derartiger Membrane beruht darauf daß die gelösten bzw. freien Gase sowie Wasser auf der Seite der Hydraulikflüssigkeit in der Membran gelöst werden und auf der anderen Seite der Membran wieder freigesetzt werden, wobei der Stofftransport durch die Membran aufgrund eines Konzentrationsgefälles durch Diffusion erfolgt. Selbstverständlich kann auch freie Luft über die Membran entfernt werden.

Die Permeabilität für Wasser der in Frage kommenden Membranwerkstoffe ist in der Regel höher als die für die entsprechenden Gase (Stickstoff, Sauerstoff etc.), so daß sich eine simultane Entwässerung der in aller Regel hygroskopischen Hydraulikflüssigkeiten anbietet. Für die Entwässerung ist eine höhere Temperatur der Hydraulikflüssigkeit (60 bis 100 ° C) von Vorteil, wie sie im Hydrauliksystem entweder ohnehin vorliegt oder aufgebaut wird.

Ist die Permeatseite zur Umgebung hin geöffnet, so wird nur dann die Hydraulikflüssigkeit entgast bzw. entwässert, wenn eine Druckerhöhung im Hydrauliksystem vorliegt. Ist dies nur kurzzeitig der Fall (z.B. in Bremssystemen), so kann die Entgasungsdauer bzw. Entwässerungsdauer zu gering sein, es sei denn, das erforderliche Partialdruckgefälle ist durch das Vorliegen eines Unterdrucks außerhalb des Hydrauliksystems (wie z.B. bei Flugzeugen) gegeben. In derart gelagerten Fällen und dann, wenn eine kontinuierliche Entlüftung bzw. Entwässerung unabdingbar ist, kann auch ein Unterdrucksystem an der Permeatseite vorgesehen sein, das permanent ein Partialdruckgefälle aufrecherhält.

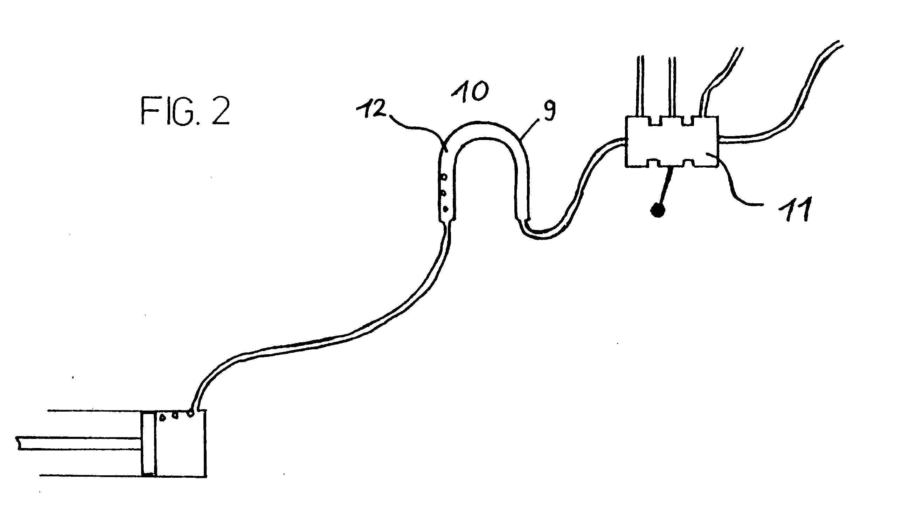

Fig. 2 zeigt eine andere vorteilhafte Ausbildung der Erfindung, wobei an der Leitungsstelle 10 ein schlauchförmig ausgebildetes Entlüftungsmodul 12 eine nachgeordnete Vorrichtung 11, die beispielsweise eine Pumpe oder ein Nehmerzylinder sein kann, schützt.

Fig. 3 zeigt eine Ausbildung mit Abführung des Permeats durch Anbindung an ein Unterdrucksystem. Diese Variante ist besonders von Vorteil, wenn gleichzeitig Wasser entfernt werden soll bzw. wenn ohnehin Unterdruck vorhanden ist (Luftfahrt, Kfz mit Unterdruckpumpe etc.).

Als Membranmaterialien kommen beispielsweise Polypropylen (PP), Polyethylen (PE), Polyvinyltrimethylsiloxan (PVTMS), Polytetrafluorethylen (PTFE), Polybutadien (PB), Polydimethylsiloxan (PDMS) oder Polychloropren (PCP), wobei mit der Bremsflüssigkeit DOT4 in Versuchen beispielsweise bei einer Membranfläche von 20 cm² Entgasungsleistungen von 2,5 ml/min erreicht wurden.

## Patentansprüche

1. Verfahren zur gleichzeitigen Entgasung und Entwässerung von Hydraulikflüssigkeiten innerhalb eines Hydrauliksystems, wobei in der Hydraulikflüssigkeit gelöste Gase und enthaltenes Wasser nach dem Prinzip der Pervaporation an einer für Gas und Wasser durchlässigen und für die Hydraulikflüssigkeit undurchlässigen Membran (9), die in einen schlauchartigen Leitungsabschnitt (2) des Hydrauliksystems integriert ist, von der Hydraulikflüssigkeit abgetrennt werden, und wobei zum Aufrechterhalten eines Partialdruckgefälles im Bereich der Membran innerhalb des Hydrauliksystems ein Überdruck und außerhalb des Hydrauliksystems ein Unterdruck aufgebaut bzw. aufrechterhalten wird.

2. Verfahren gemäß Anspruch 1, dadurch gekennzeichnet, daß zum Aufrechterhalten des Partialdruckgefälles innerhalb des Hydrauliksystems ein Überdruck aufgebaut oder ein bestehender Überdruck genutzt wird.

3. Verfahren gemäß Anspruch 1, dadurch gekennzeichnet, daß zur Entwässerung der Hydraulikflüssigkeit die Temperatur der Hydraulikflüssigkeit erhöht oder eine erhöhte Temperatur der Hydraulikflüssigkeit genutzt wird.

4. Vorrichtung zum Durchführen des Verfahrens gemäß Anspruch 1, dadurch gekennzeichnet, daß innerhalb eines Hydrauliksystems eine für Gas und Wasser durchlässige und für Hydraulikflüssigkeit undurchlässige Membran (9) vorgesehen ist, und wobei an der dem Hydrauliksystem abgewandten Außenseite der Membran (9) Mittel zum Aufbauen eines Unterdrucks vorgesehen sind.

5. Vorrichtung gemäß Anspruch 4, dadurch gekennzeichnet, daß die Membran (9) zylindrisch ausgebildet ist.

6. Vorrichtung gemäß Anspruch 4, dadurch gekennzeichnet, daß die Membran (9) eine Lösungs-/ Diffusionsmembran ist.

7. Vorrichtung gemäß Anspruch 4, dadurch gekennzeichnet, daß die Membran (9) aus Polypropylen (PP), Polyethylen (PE), Polyvinyltrimethylsiloxan (PVTMS), Polytetrafluorethylen (PTFE), Polybutadien (PB), Polydimethylsiloxan (PDMS) oder Polychloropren (PCP) besteht.

8. Verwendung der Vorrichtung gemäß der Ansprüche 4 bis 7 zur Entgasung und Entwässerung der Hydraulikflüssigkeit in Steuer-, Regel-, Antriebs- und Bremshydrauliksystemen von Kraftfahrzeugen, Schiffen und Flugzeugen.

## Claims

1. Method of simultaneously removing gas and removing water from hydraulic fluids within a hydraulic system, the gases dissolved and water contained in the hydraulic fluid being removed from the hydraulic fluid by the principle of pervaporation on a membrane (9) that is permeable to gas and water and impervious to the hydraulic fluid, integrated in a hose-type line section (2) of the hydraulic system, an over-pressure within the hydraulic system and a vacuum pressure externally to the hydraulic system being generated or maintained in order to maintain a partial pressure drop in the region of the membrane.

2. Method as claimed in claim 1, characterised in that an over-pressure is generated or an existing over-pressure used to maintain the partial pressure drop within the hydraulic system.

3. Method as claimed in claim 1, characterised in that the temperature of the hydraulic fluid is increased or an increased temperature of the hydraulic fluid is used to remove water from the hydraulic fluid.

4. Device for implementing the method as claimed in claim 1, characterised in that a membrane (9) which is permeable to gas and water and impervious to hydraulic fluid is provided in a hydraulic system and means for generating an over-pressure are provided on the external side of the membrane (9) remote from the hydraulic system.

5. Device as claimed in claim 4, characterised in that the membrane (9) is of a cylindrical design.

6. Device as claimed in claim 4, characterised in that the membrane (9) is a solution/diffusion membrane.

7. Device as claimed in claim 4, characterised in that the membrane (9) is made from polypropylene (PP), polyvinyl trimethyl siloxane (PVTMS), polytetrafluoroethylene (PTFE), polybutadiene (PB), polydimethyl siloxane (PDMS) or polychloroprene (PCP).

8. Use of the device as claimed in one of claims 4 to 7 for degassing and removing water from the hydraulic fluid in hydraulic control, regulating, drive and brake systems of motor vehicles, sailing vessels and aircraft.

## Revendications

1. Procédé pour simultanément dégazer et déshydrater des liquides hydrauliques à l'intérieur d'un système hydraulique, selon lequel on sépare des gaz dissous dans le liquide hydraulique et de l'eau contenue dans le liquide hydraulique, de ce liquide hydraulique, selon le principe de l'évaporation à travers une membrane, au niveau d'une membrane (9), qui est perméable au gaz et à l'eau et imperméable au liquide hydraulique et est intégrée dans une section de conduite en forme de tuyau (2) du système hydraulique, et selon lequel on maintient une surpression à l'intérieur du système hydraulique et on maintient une dépression à l'extérieur du système hydraulique.

2. Procédé selon la revendication 1, caractérisé en ce que pour le maintien du gradient de pression partielle à l'intérieur du système hydraulique, on établit une surpression ou on utilise une surpression existante.

3. Procédé selon la revendication 1, caractérisé en ce que pour déshydrater le liquide hydraulique, on augmente la température du liquide hydraulique ou on utilise une température accrue du liquide hydraulique.

4. Dispositif pour la mise en oeuvre du procédé selon la revendication 1, caractérisé en ce qu'à l'intérieur d'un système hydraulique, il est prévu une membrane (9) perméable pour le gaz et l'eau et imperméable pour le liquide hydraulique, et dans lequel des moyens pour établir une dépression sont prévus au niveau de la face extérieure de la membrane (9), tournée à l'opposé du système hydraulique.

5. Dispositif selon la revendication 4, caractérisé en ce que la membrane (9) possède une forme cylindrique.

6. Dispositif selon la revendication 4, caractérisé en ce que la membrane (9) est une membrane de diffusion de solution.

7. Dispositif selon la revendication 4, caractérisé en ce que la membrane (9) est formée par du polypropylène (PP), du polyéthylène (PE), du polyvinyltriméthylsiloxane (PVTMS), du polytétrafluoroéthylène (PTFE), du polybutadiène (PB), du polydiméthylsiloxane (PDMS) ou du polychloroprène (PCP).

8. Utilisation du dispositif selon les revendications 4 à 7, pour le dégazage et la déshydratation du liquide hydraulique dans des systèmes hydrauliques de commande, de régulation, d'entraînement et de freinage de véhicules automobiles, de bateaux et d'avions.
